# EUROPEAN PATENT APPLICATION

(11) **EP 4 752 064 A1**
(43) Date of publication of application: **03.06.2026**
(21) Application number: 24215676.8
(22) Date of filing: 27.11.2024
(51) Int. Cl.: B64D 27/40, B64D 27/31, B64D 27/34

(54) **A PROPULSION ARRANGEMENT FOR AN AIRCRAFT AND AN AIRCRAFT STRUCTURE FORMING PART OF SUCH PROPULSION ARRANGEMENT**

(71) Applicant: Heart Aerospace AB, 417 46 Göteborg (SE)
(72) Inventor: HELLSING, Johan, 425 30 Hisings Kärra (SE); HALMULCZUK-SOBIERAJ, Dominka, 417 49 Göteborg (SE)
(74) Representative: Murgitroyd & Company

(57) **Abstract**

The present invention relates to a propulsion arrangement (100) for an aircraft (1), the propulsion arrangement (100) comprising: a propulsion unit (41) including an electrical motor (42) with an outgoing shaft (13), and a propeller assembly (14) with a propeller shaft (43); and a mounting structure (40) for the propulsion unit (41), wherein the propeller shaft (43) and the outgoing shaft (13) of the electrical motor (42) are connected by a non-geared connection (110), and wherein the mounting structure (40) comprises: a main section (44) configured to be rigidly connected to an aircraft structure (39); and a separate forward section (45) to which the propeller assembly (14) is rotatably connected, wherein the forward section (45) is connected to the main section (44), such that loads acting on the propeller assembly (14) are supported by the aircraft structure (39).

## Description

### TECHNICAL FIELD

The present disclosure relates to the field of a propulsion arrangement for an aircraft. Specifically, the present disclosure relates to a propulsion arrangement comprising a propulsion unit with an electrical motor and a propeller assembly, and a mounting structure for the propulsion unit. The present disclosure also relates to an aircraft structure forming part of the disclosed propulsion arrangement.

### BACKGROUND

Installing propulsion arrangements including engines and a propeller assembly on the wings of an aircraft pose challenges in relation to mounting structures. Traditionally, the engines are mounted to the wing and the propeller assembly is mounted to the output shaft of the engine.

The engine may be an electric motor or a gas turbine/gearbox of a turboprop engine. The engine comprises an outgoing shaft extending from the engine to transfer the rotational movement of the outgoing shaft to the propeller assembly.

An engine with a large diameter will have to be positioned at a certain distance behind the propeller assembly to fit into an aerodynamic optimized nacelle. This will in turn mean that the engine will have to include an extended outgoing shaft (50-100 cm long), which will introduce a very severe load situation for engine bearings.

In the event that an electric motor is used with no gearbox, the electric motor torque will have to be large and diameter of the electric motor will grow - which in turn requires the electrical motor to be positioned further away from the propeller assembly. Some prior art solutions exist where the electric motor comprises an extended front structure to allow the motor bearings to be placed along the outgoing shaft within an extended front structure of the electrical motor. All propeller loads will with such implementation be contained within a single front structure belonging to the electrical motor. Furthermore, the motor mounting structure will carry the total weight of motor and propeller assembly, as well as taking all propeller axial, torsional and bending loads. Considering all these aspects makes it difficult to construct a direct-drive electric engine to carry propeller loads without increasing weight and generating an even more bulky design.

### SUMMARY

An object of the present disclosure is to provide a propulsion arrangement which seeks to mitigate, alleviate, or eliminate one or more of the above-identified deficiencies in the art and disadvantages singly or in any combination.

An object of the present disclosure is to provide a propulsion arrangement which unloads the electrical motor from the propeller loads.

Hence, according to a first aspect of the present disclosure is provided a propulsion arrangement for an aircraft, the propulsion arrangement comprising: a propulsion unit including an electrical motor with an outgoing shaft, and a propeller assembly with a propeller shaft; and a mounting structure for the propulsion unit, wherein the propeller shaft and the outgoing shaft of the electrical motor are connected by a non-geared connection, and wherein the mounting structure comprises: a main section configured to be rigidly connected to an aircraft structure; and a separate forward section to which the propeller assembly is rotatably connected, wherein the forward section is connected to the main section, such that loads acting on the propeller assembly are supported by the aircraft structure.

By means of a propulsion arrangement according to the present disclosure, the propeller loads will be supported by the aircraft structure via the forward section of the mounting structure. The mounting structure comprises two separate sections, the main section and the forward section, which will separate the loads of the propulsion unit into two parts. This way, the electrical motor does not carry any propeller loads and can be designed to handle only its own weight and torque loads. The propeller loads will thereby be handled by the airframer providing the aircraft structure instead of by the motor supplier. This will also make it clearer from a certification perspective, to clarify where the responsibility lies.

The main section and the forward section of the mounting structure are arranged one after the other in a row, where the main section is arranged closest to the aircraft structure, and the forward section is arranged furthest away from the aircraft structure. The forward section is configured to at least partly surround the propeller shaft. The forward section may additionally at least partly surround the outgoing shaft from the electrical motor and/or the non-geared connection between the outgoing shaft and the propeller shaft.

The outgoing shaft from the electrical motor and the propeller shaft are as previously mentioned connected by a non-geared connection. It is to be understood that by non-geared connection means a connection that does not include any gears. The non-geared connection is thus a connection configured to transmit torque and rotational motion directly from the electrical motor to the propeller shaft without altering the speed or direction through gears. The speed ratio is thus 1:1 with the non-geared connection. The non-geared connection may be referred to as a direct connection, including end-to-end connection between the shafts or via a coupling.

In one example of the present disclosure, the electrical motor is rigidly connected to the forward section. The electrical motor may be rigidly connected to the forward section of the mounting structure by means of fasteners, such as screws or bolts or similar. This way, the forward section will carry the weight of the electrical motor. In another example, the electrical motor is flexibly connected to the forward section, e.g. to dampen vibration and/or to allow for physical alignment. The electrical motor may be flexibly connected to the forward section via dampers, vibration absorbers, rubber mount or similar.

In the event that the electrical motor is rigidly connected to the forward section of the mounting structure, the non-geared connection between the propeller shaft and the outgoing shaft of the electrical motor may be a rigid connection. By using a rigid connection, a high transmission accuracy is achieved with precise alignment and minimal play. This is specifically advantageous for applications with high torques and loads. A rigid connection will also require less maintenance and are more durable. The rigid connection may also be referred to as a rigid coupling. The rigid connection may be a flange coupling. The propeller shaft may thus comprise a flange directly connected to a flange of the outgoing shaft of the electrical motor. Alternatively, the rigid connection is a sleeve or muff coupling.

The forward section may be flexibly connected to the main section. The forward section may be flexibly connected to the main section by damping elements arranged between the forward section and the main section. This way, vibrations from the propeller assembly will not propagate through the forward section to the main section. Furthermore, in the event that the electrical motor is rigidly connected to the forward section, vibrations from the electrical motor will be prevented from propagating through the forward section to the main section of the mounting structure and on to the aircraft structure. The damping elements may be referred to as isolators and are configured to stop propagation of vibrations and resonance.

In one example of the present disclosure, the electrical motor is flexibly connected to the main section of the mounting structure. This way, the main section will carry the weight of the electrical motor but vibrations from the electrical motor will not propagate to the main section of the mounting structure. The flexible connection between the electrical motor and the main section may also help distributing the load on the main section more evenly and thereby reduce the stress on the main section.

In the event that the electrical motor is flexibly connected to the main section of the mounting structure, the non-geared connection between the propeller shaft and the outgoing shaft of the electrical motor may be a flexible connection. This way, the flexible connection will absorb and dampen vibrations from the propeller assembly and thereby reduce the transmission of vibrations to the electrical motor. The flexible connection will also accommodate misalignments and reduce the forces caused by misalignments. The flexible connection may comprise a flexible joint. Flexible joints are well known in the art, and in this application the flexible joint is preferably low maintenance or maintenance free. Examples of suitable flexible joints can be found on the webpage: https://www.ringspann.se/en/products/couplings and comprises disc couplings, jaw couplings, pin and bush couplings, grid couplings, cone clamping couplings, etc. The flexible connection may comprise a spline connection.

In the event that the electrical motor is flexibly connected to the main section of the mounting structure, the forward section may be rigidly connected to the main section.

The propulsion arrangement may further comprise at least one bearing arranged between the forward section and the propeller shaft. The propeller shaft extends through the forward section and at least one bearing is arranged to surround the propeller shaft inside the forward section. Such bearing may be referred to as a propeller shaft bearing. Thus, the propeller assembly is flexibly connected to the forward section by at least one propeller shaft bearing. When the outgoing shaft of the electrical motor and the propeller shaft are rigidly connected, only one propeller shaft bearing may be required. Typically, the electrical motor comprises motor bearings supporting the outgoing shaft of the electrical motor inside the motor.

The main section of the mounting structure may comprise a truss structure including a front frame connected to the forward section. The truss structure may at least partly surround the electrical motor. The electrical motor may be arranged in association with the front frame of the main section. The front frame may be configured to support the flexible connection between the outgoing shaft and the propeller shaft. The front frame may be referred to as a transverse frame and may be essentially annular. The front frame may comprise attachment portions. The attachment portions may be configured for attachment to the damping elements connecting the forward section and the main section. Alternatively, the attachment portions are configured for rigid attachment directly to the forward section.

The forward section may comprise an inner cylindrical body through which the propeller shaft extends. The cylindrical body will protect the propeller shaft and the outgoing shaft from the electrical motor, as well as the non-geared connection therebetween. The at least one propeller shaft bearing is suitably arranged inside the cylindrical body. The cylindrical body extends longitudinally between a first end closest to the main section of the mounting structure, and a second end closest to the propeller assembly.

The forward section may further comprise an essentially frustoconical outer support structure. The frustoconical support structure is thus arranged outside the cylindrical body and is connected to the cylindrical body. The support structure may comprise wings having the shape of right-angled triangles. The wings are typically arranged with one leg extending in parallel with the cylindrical body and the adjacent leg extending perpendicularly to the longitudinal extension of the cylindrical body at the end closest to the main section of the mounting structure. The hypothenuse of the wings will therefore form the frustoconical shape of the outer support structure. The wings may comprise apertures to reduce the weight of the structure but still provide sufficient support. In one example, the support structure comprises a plurality of annular elements with different diameters. The annular elements are suitably arranged with the one having the largest diameter closest to the first end of the cylindrical body, and the one with the smallest diameter closest to the second end of the cylindrical body. The annular elements are typically connected by means of at least one elongated strip. In another example, the support structure comprises a cone extending around the cylindrical body and being connected to the second end of the cylindrical body. The support structure may thus comprise a wall shaped as a cone surrounding the cylindrical body. In yet another example, the support structure comprises a plurality of bars connected to the second end of the cylindrical body and diverging in direction of the first end of the cylindrical body.

The support structure may further comprise a base plate surrounding the first end of the cylindrical body. The base plate may be configured to be connected to the main section of the mounting structure. In some examples, the electrical motor is connected to the base plate. In the event that the outer support structure of the forward section comprises wings, bars or a cone, the wings, bars and the cone may be connected to the base plate at the first end of the cylindrical body.

The cylindrical body of the forward section of the mounting frame may comprise a flange portion at the second end. The flange portion may extend radially over the support structure at the second end of the cylindrical body.

The main structure may form part of the aircraft structure and is designed to support the propeller loads. In some examples, the main structure, which may be a truss structure, is thus comprised in the aircraft structure.

According to a second aspect of the present disclosure, an aircraft structure for an aircraft is provided, the aircraft structure comprising a main structure configured to form part of at least one propulsion arrangement as disclosed herein, wherein the aircraft structure is designed to support the propeller loads. By having a mounting structure with a main section being part of the aircraft structure, which main structure is configured to carry the propeller loads, the electrical motor can be made to only carry its own weight and torque loads.

According to a third aspect of the present disclosure, an aircraft is provided, the aircraft comprising the aircraft structure as disclosed above and at least one propulsion arrangement as disclosed herein.

It is to be understood that effects and features of the second aspect and third aspects are to a large extent analogous to those described above in connection with the first aspect. Embodiments mentioned in relation to the first aspect are largely compatible with the second and third aspects.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1a schematically illustrates an aircraft according to an example of the present disclosure;
Figure 1b schematically illustrates a nacelle arrangement of an aircraft according to an example of the present disclosure;
Figure 2 schematically illustrates a propulsion arrangement according to an example of the present disclosure;
Figure 3 schematically illustrates a propulsion arrangement according to an example of the present disclosure
Figures 4a-d schematically illustrate details of a propulsion arrangement according to examples of the present disclosure;
Figure 5 schematically illustrates a propulsion arrangement according to an example of the present disclosure;
Figure 6 schematically illustrates details of a propulsion arrangement according to an example of the present disclosure; and
Figure 7 schematically illustrates a propulsion arrangement according to an example of the present disclosure.

### DETAILED DESCRIPTION

Aspects of the present disclosure will be described more fully hereinafter with reference to the accompanying drawings. The arrangement disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

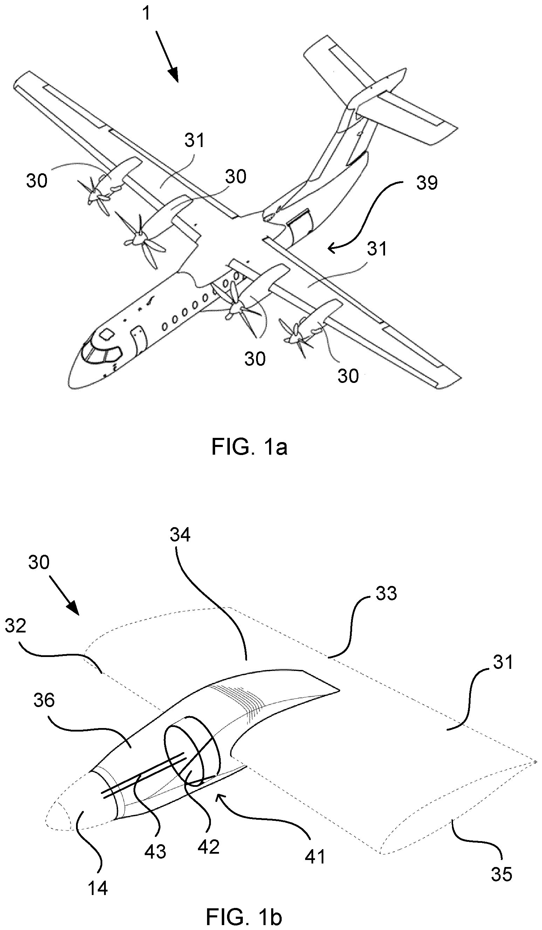

Figure 1a schematically illustrates an aircraft 1 according to an example of the present disclosure. The aircraft 1 comprises an aircraft structure 39 including aircraft wings 31, and nacelle arrangements 30 arranged on the aircraft wings 31. Similar nacelle arrangements 30 are described in more detail in the pending Swedish patent application with application number 2450877-2.

The aircraft wings 31 may for example be constant chord wings or tapered (wing narrows towards the tip). The aircraft wings 31 may for example be straight (extends at right angles to the line of flight) or swept back. The aircraft wings 31 may or may not be dihedral. The aircraft wings 31 may be high wings.

Figure 1b schematically illustrates a nacelle arrangement 30 of an aircraft according to an example of the present disclosure. The aircraft may be configured as in Figure 1a. This figure only shows one nacelle arrangement 30 arranged on an aircraft wing 31 but it is to be understood that an aircraft may comprise multiple nacelle arrangements 30. The aircraft wing 31 comprises a leading edge 32, a trailing edge 33, a topside 34, and an underside 35. At the trailing edge 33, the aircraft wing 31 may comprise at least one flap.

The nacelle arrangement 30 comprises a nacelle 36, which is generally defined as a streamlined enclosure on an aircraft (Merriam-Webster). Here, the nacelle 36 may be adapted to at least partly house or accommodate a propulsion unit 41. The propulsion unit 41 may for example comprise an electric motor 42 inside the nacelle 36, which electric motor is coupled to a propeller assembly 14 fore of the nacelle 36. The nacelle 36 may comprise a front opening for a propeller shaft 43 coupled to the above-mentioned propeller assembly 14.

The nacelle 36 may be attached to the topside 34, the leading edge 32, and the underside 35 of the aircraft wing 31. As such, the nacelle 36 may be centrally positioned on the wing 31. In this way, the thrust line gets close to the wing box centre leading to a reduced torsion, compared to conventional designs where the nacelle is located under the wing.

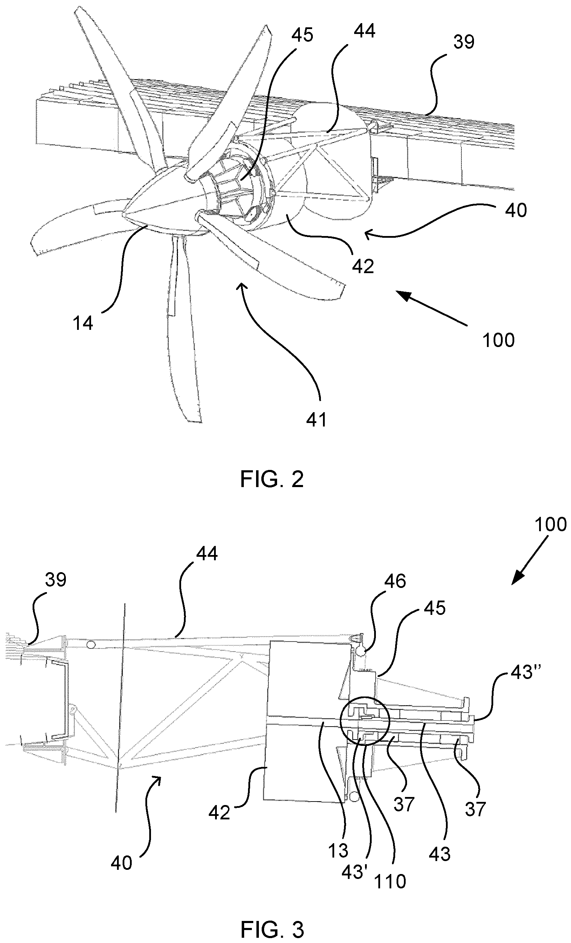

Figure 2 schematically illustrates a propulsion arrangement 100 for an aircraft according to an example of the present disclosure. The propulsion arrangement 100 comprises a propulsion unit 41 as disclosed in Figure 1b. The propulsion unit 41 thus comprises an electrical motor 42 and a propeller assembly 14. The propulsion unit 100 further comprises a mounting structure 40 for the propulsion unit 41. The mounting structure 40 comprises a main section 44 and a separate forward section 45. The main section 44 is configured to be rigidly connected to an aircraft structure 39, typically the structure of an aircraft wing. The forward section 45 and the propeller assembly 14 are rotatably connected. That is, the propeller assembly 14 can rotate in relation to the forward section 45 of the mounting structure 40. The forward section 45 is connected to the main section 44, such that loads acting on the propeller assembly 14 are supported by the aircraft structure 39 to which the main section 44 of the mounting structure 40 is rigidly connected. This way, the electrical motor 42 is unloaded from the propeller loads and the mounting structure 40 is instead configured to carry the propeller loads.

Figure 3 shows a cross-sectional view of a propulsion arrangement 100 according to an example of the present disclosure. The propulsion arrangement 100 may be configured as disclosed in Figure 2, but for simplicity reasons the parts of the propeller assembly 14 has been omitted.

The figure shows that the electrical motor 42 comprises an outgoing shaft 13 and the propeller assembly comprises a propeller shaft 43. The outgoing shaft 13 and the propeller shaft 43 are connected to each other with a non-geared connection 110. In this example, the non-geared connection 110 is a flange coupling, meaning that a flange portion of the outgoing shaft 13 and a flange portion of the propeller shaft 43 are connected to each other. In this example, the non-geared connection is a rigid connection. The propeller shaft 43 may comprise a first flange portion 43' configured to be connected to the outgoing shaft 13 of the electrical motor 42 and a second flange portion 43" at the opposite end, for connection with the propeller.

The main section 44 of the mounting structure 40 comprises a truss structure including a front frame 46. The truss section at least partly surrounds the electrical motor 42. The front frame 46 is connected to the forward section 45 of the mounting structure 40. The electrical motor 42 is rigidly connected to the forward section 45 of the mounting structure 40, for example by means of fasteners such as bolts, screws or similar.

The propulsion arrangement 100 further comprises at least one bearing 37 arranged between the forward section 45 and the propeller shaft 43. Figure 3 shows two bearings 37 encircling the propeller shaft 43 inside the forward section 45 but with the rigid connection 110 between the outgoing shaft 13 of the electrical motor 42 and the propeller shaft 43, one bearing 37 could be sufficient.

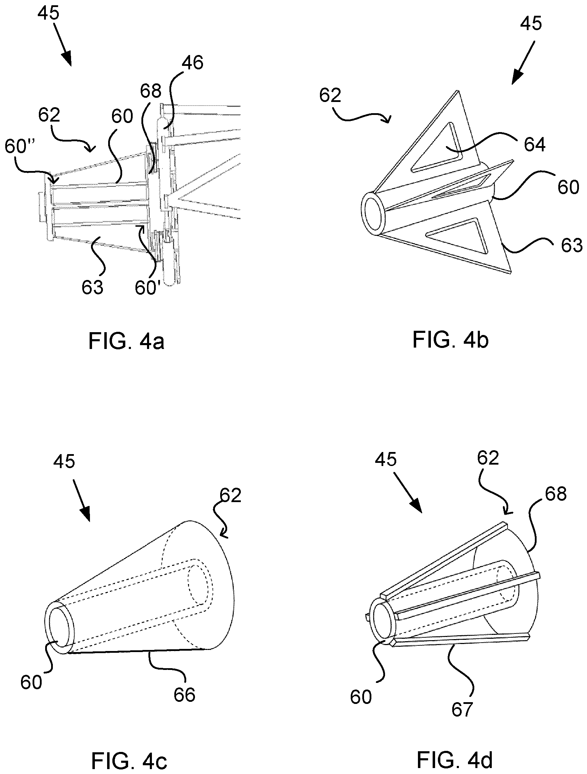

Figures 4a to 4d schematically illustrate the forward section 45 of the mounting structure 40 of the propulsion arrangement 100 as disclosed in Figure 2 or 3. The forward section 45 comprises an inner cylindrical body 60. The propeller shaft 43 is extending through this cylindrical body 60 and the at least one bearing supporting the propeller shaft is arranged inside the cylindrical body 60. The cylindrical body 60 has a first end 60' and a second end 60". The first end 60' is arranged adjacent the main section of the mounting structure, and the second end 60" is arranged adjacent the propeller assembly. The forward section 45 further comprises an outer support structure 62, which is essentially frustoconical. The smaller end of the support structure 62 is arranged at the second end 60" of the cylindrical body 60, and the larger end of the support structure 62 is arranged at the first end 60' of the cylindrical body 60. The forward section 45 may also comprise a base plate 68 at the first end 60' of the cylindrical body 60. The base plate 68 may be connected to the main section of the mounting structure. The support structure 62 may also be connected to the base plate 68.

Figure 4a shows the support structure 62 comprising wings 63 extending radially out from the cylindrical body and along the longitudinal extension of the cylindrical body. The wings 63 are essentially right-angled with the 90-degree angle arranged at the first end 60' of the cylindrical body 60. Thus, one of the triangle legs are arranged in parallel with, and abutting, the longitudinal extension of the cylindrical body 60, and the perpendicular leg is extending perpendicularly from the cylindrical body 60 at the first end 60' of the cylindrical body 60. The support structure 62 may comprise at least three wings 63, preferably at least six wings 63.

Figure 4b shows an example where the wings 63 of the support structure 62 comprises openings 64. This way, the weight of the support structure 62 is reduced.

Figure 4c shows an example where the support structure 62 comprises a conical wall 66 surrounding the cylindrical body 60. The conical wall 66 may be connected to the base plate 68 at the first end 60' of the cylindrical body 60. The volume contained between the conical wall 66 and the cylindrical body 60 may be filled with a suitable material to increase rigidness of the forward structure 45 without adding unnecessary weight. The material could be polymers either moulded to the cylindrical body 60 and then covered by the outer conical wall 66 (e.g. metallic sheet), or injection moulded into the void between the cylindrical body 60 and the outer conical wall 66. Figure 4d shows an example where the support structure 62 comprises a plurality of bars 67 connected to the second end 60" of the cylindrical body 60 and diverging in direction towards the first end 60' of the cylindrical body 60. The bars 67 are suitably connected to the periphery of the base plate 68 at the first end of the cylindrical body 60.

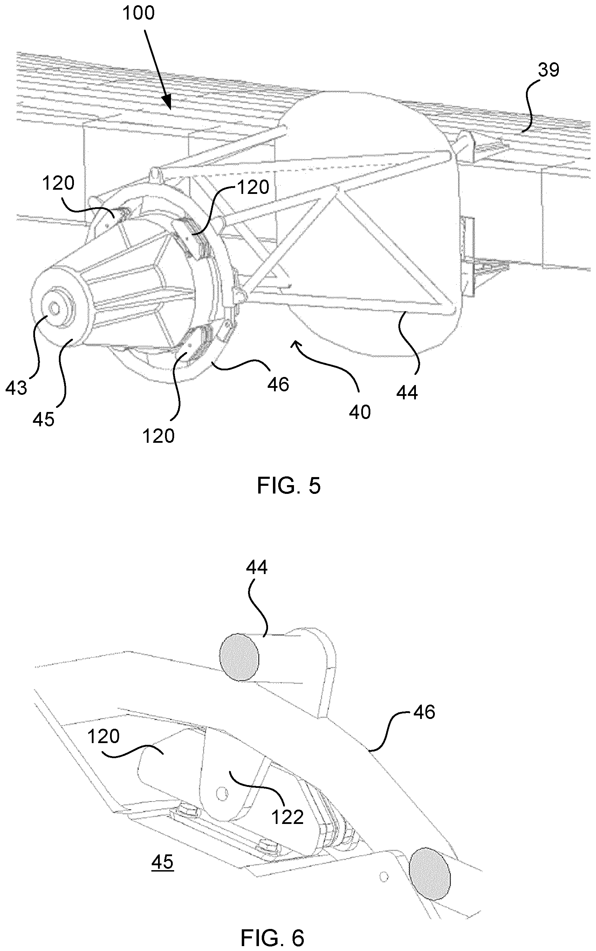

Figure 5 schematically illustrates a propulsion arrangement 100 according to an example of the present disclosure. The propulsion arrangement 100 is configured as disclosed in any of Figure 1-4. In this example, the forward section 45 of the mounting structure 40 is flexibly connected to the main section 44. The propulsion arrangement 100 thus comprises damping elements 120 arranged between the forward section 45 and the main section 44. Specifically, the damping elements 120 are arranged between the front frame 46 of the main section 44 and the forward section 45.

As shown in Figure 6, the front frame 46 of the main section 44 may comprise integrated attachment portions 122 configured to be attached to the damping elements 120 and thereby to connect the main section 44 to the forward section 45. It is to be understood that Figure 6 shows the front frame 46 from an opposite side compared to Figure 5.

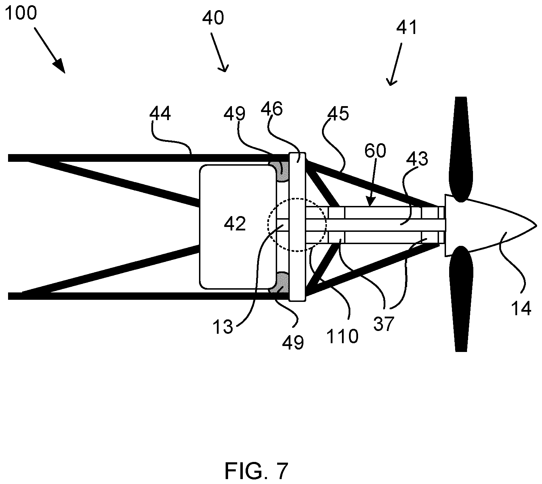

The innovation, as illustrated in Figure 7, is based on a technical solution where the mounting structure is designed to separate the loads of the propulsion unit into two parts. A first load carrying structure, including a pair of bearings, shall carry all propeller loads, and a second structure, including the electrical motor, shall carry the motor weight and the motor torque loads.

Figure 7 schematically illustrates a propulsion arrangement 100 for an aircraft according to an example of the present disclosure. The propulsion arrangement 100 comprises a propulsion unit 41 as disclosed in Figure 1b. The propulsion unit 41 thus comprises an electrical motor 42 and a propeller assembly 14. The propulsion unit 100 further comprises a mounting structure 40 for the propulsion unit 41. The mounting structure 40 comprises a main section 44 and a separate forward section 45. The main section 44 is configured to be rigidly connected to an aircraft structure, typically the structure of an aircraft wing. The forward section 45 and the propeller assembly 14 are rotatably connected. That is, the propeller assembly 14 can rotate in relation to the forward section 45 of the mounting structure 40. The forward section 45 is connected to the main section 44, such that loads acting on the propeller assembly 14 are supported by the aircraft structure 39 to which the main section 44 of the mounting structure 40 is rigidly connected. This way, the electrical motor 42 is unloaded from the propeller loads and the mounting structure 40 is instead configured to carry the propeller loads.

In this example, the electrical motor 42, is flexibly connected to the main section 44 of the mounting structure 40. The electrical motor 42 may be flexibly connected to the main section 44 via mounts 49, such as rubber dampers or similar.

Furthermore, the propeller assembly 14 comprises a propeller shaft 43 and the electric motor 42 comprises an outgoing shaft 13, wherein the two shafts are connected to each other with a non-geared connection 110. The non-geared connection 110 between the outgoing shaft 13 and the propeller shaft 43 is positioned where the dotted circle is in the figure. In this example, the propeller shaft 43, is at a first end flexibly connected to the outgoing shaft 13 of the engine 42 and is at a second end, opposite to the first end, rigidly attached to the propeller to ensure transfer of the rotational movement of the outgoing shaft 13 to the propeller. The non-geared connection may thus be a flexible connection. The flexible connection may also be referred to as a flexible joint. The propeller shaft 43 may be flexibly attached to the outgoing shaft 13 using a flexible joint, such as a spline connection.

The main section 44 of the mounting structure 40 optionally comprises a front frame 46 connecting the main section 44 and to the forward section 45. The main section 44 and the forward section 45 of the mounting structure are suitably rigidly connected to each other. The front frame 46 may be configured to support the flexible joint 110 between the outgoing shaft 13 and the propeller shaft 43.

The propeller shaft 43 may be attached to the forward section 45 using a plurality of propeller load bearings 37. The forward section 45 of the mounting structure 40 may be configured as disclosed in any of Figures 4a-d. The load bearings 37 may be positioned within the cylindrical body 60.

The electrical motor 42 and the propeller load bearings 37 must be flexibly connected (splines or similar) so that the electrical motor 42 will be relieved from the propeller loads. The motor bearings (placed within the electrical motor to support the outgoing shaft 13 of the electrical motor) will be designed only for the motor-internal loads and the motor front structure, and mounts 49 will be designed only for the motor weight and torque loads.

An advantage with the present invention is that the electrical motor can be designed to handle only its own weight and torque loads. The propeller loads will be handled by the airframer instead of by the motor supplier. This may be an advantage from a technical point of view - and is an advantage from a certification point of view.

Thus, the mounting structure 40, as described in connection with figure 7, separates the loads of the propulsion unit 41 into two parts: propeller loads and motor loads (motor weight and motor torque).

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A propulsion arrangement (100) for an aircraft (1), the propulsion arrangement (100) comprising:
- a propulsion unit (41) including an electrical motor (42) with an outgoing shaft (13), and a propeller assembly (14) with a propeller shaft (43); and
- a mounting structure (40) for the propulsion unit (41),
wherein the propeller shaft (43) and the outgoing shaft (13) of the electrical motor (42) are connected by a non-geared connection (110), and wherein the mounting structure (40) comprises:
a main section (44) configured to be rigidly connected to an aircraft structure (39); and
a separate forward section (45) to which the propeller assembly (14) is rotatably connected,
wherein the forward section (45) is connected to the main section (44), such that loads acting on the propeller assembly (14) are supported by the aircraft structure (39).

2. The propulsion arrangement 100) according to claim 1, wherein the electrical motor (42) is rigidly connected to the forward section (45).

3. The propulsion arrangement (100) according to claim 2, wherein the non-geared connection (110) between the propeller shaft (43) and the outgoing shaft (13) of the electrical motor (42) is a rigid connection.

4. The propulsion arrangement (100) according to claim 2 or 3, wherein the non-geared connection (110) is a flange coupling.

5. The propulsion arrangement (100) according to any one of the preceding claims, wherein the forward section (45) is flexibly connected to the main section (44) by damping elements (120) arranged between the forward section (45) and the main section (44).

6. The propulsion arrangement (100) according to claim 1, wherein the electrical motor (42) is flexibly connected to the main section (44).

7. The propulsion arrangement (100) according to claim 6, wherein the non-geared connection (110) between the propeller shaft (43) and the outgoing shaft (13) from the electrical motor (42) is a flexible connection.

8. The propulsion arrangement (100) according to claim 6 or 7, wherein the forward section (45) is rigidly connected to the main section (44).

9. The propulsion arrangement (100) according to any one of the preceding claims, further comprising at least one bearing (47) arranged between the forward section (45) and the propeller shaft (43).

10. The propulsion arrangement (100) according to any one of the preceding claims, wherein the main section (44) of the mounting structure (40) comprises a truss structure including a front frame (46) connected to the forward section (45).

11. The propulsion arrangement (100) according to any one of the preceding claims, wherein the forward section (45) comprises an inner cylindrical body (60) through which the propeller shaft (43) extends.

12. The propulsion arrangement (100) according to any one of the preceding claims, wherein the forward section (45) comprises an essentially frustoconical outer support structure (62).

13. The propulsion arrangement (100) according to any one of the preceding claims, wherein the main structure (44) forms part of the aircraft structure (39) and is designed to support the propeller loads.

14. An aircraft structure (39) for an aircraft (1), the aircraft structure (39) comprising a main structure (44) configured to form part of at least one propulsion arrangement (100) according to any one of claims 1-12, wherein the aircraft structure (39) is designed to support the propeller loads.

15. An aircraft (1) comprising the aircraft structure (39) according to claim 14 and at least one propulsion arrangement (100) according to any one of claims 1-12.
